# EUROPEAN PATENT APPLICATION

(11) **EP 4 617 111 A1**
(43) Date of publication of application: **17.09.2025**
(21) Application number: 23893914.4
(22) Date of filing: 22.11.2023
(51) Int. Cl.: B60L 58/40

(54) **BATTERY ENERGY MANAGEMENT METHOD AND APPARATUS, ELECTRONIC DEVICE, AND VEHICLE**

(30) Priority: 25.11.2022 CN 202211512918
(71) Applicant: Great Wall Motor Company Limited, Baoding, Hebei 071000 (CN)
(72) Inventor: ZHOU, Mingwang, Baoding, Hebei 071000 (CN)
(74) Representative: Michalski Hüttermann & Partner Patentanwälte mbB
(86) International application number: PCT/CN2023/133389
(87) International publication number: WO 2024/109826

(57) **Abstract**

A battery energy management method, a battery energy management apparatus, an electronic device, and a vehicle are provided. The method comprises: after a startup mode is determined as a low-temperature cold startup mode (100), acquiring a requested power of a vehicle and determining an actual output power of a fuel cell (200); and then determining a corresponding recovery power or a compensation power according to the requested power and the actual output power (300). By recovering the recovery power in the actual output power, it is ensured that a risk of overcharging of a power battery will not occur, and the actual output power is compensated for by the compensation power, thereby solving a problem of insufficient power output of a vehicle, further ensuring that a fuel cell can be smoothly started, and avoiding a problem of continuous decrease in the battery level of the power battery or even direct power off of a vehicle.

## Description

The present invention claims priority to Chinese Patent Application No. 202211512918.5, filed with CNIPA on November 25, 2022 and entitled "Battery Energy Management Method and Apparatus, Electronic Device and Vehicle", the contents of which are incorporated herein by reference in its entirety.

### TECHNICAL FIELD

The present invention relates to the field of vehicle technology, in particular to a battery energy management method and apparatus, an electronic device and a vehicle.

### BACKGROUND

With increasing scarcity of global resources and increasingly serious environmental pollution, environmental protection has become a topic of concern in various industries, and the automotive industry is no exception. Domestic and foreign automotive industries and their component developers are paying more and more attentions to whether there will be a type of fuel that can both protect the environment and save resources and be applied to automobiles. Therefore, as a clean, efficient, and pollution-free electrochemical power generation apparatus, hydrogen fuel cells have received widespread attention at home and abroad. Meanwhile, hydrogen fuel cell automobiles have become the mainstream of the current development in the automotive industry. Therefore, safety and economic efficiency of fuel cell automobiles have become topics that every automotive enterprise must pay attention to. However, when the temperature of a power battery of a vehicle is lower than -20°C, an output power of the fuel cell is greater than a charging power of the power battery, thereby leading to overcharging of the power battery. Meanwhile, the fuel cell is prohibited from starting, thereby resulting in a continuous decrease in a battery level of a power battery or even resulting in direct power off of a vehicle. In addition, the charging and discharging power of a power battery is small at low temperatures, thereby leading to a small actual output power of a fuel cell, and causing a problem of insufficient power output of a vehicle.

### SUMMARY

In view of this, an object of the present invention is to provide a battery energy management method and apparatus, an electronic device and a vehicle, in order to solve the problems of inability of a vehicle to be powered on, overcharging of a power battery and insufficient power output in low-temperature environments.

Based on the above object, a first aspect of the present invention provides a battery energy management method, including:
determining a startup mode of a fuel cell;
if the startup mode is a low-temperature cold startup mode, acquiring a requested power of a vehicle and determining an actual output power of the fuel cell; and
determining a recovery power or a compensation power according to the requested power and the actual output power.

Optionally, the acquiring a requested power of a vehicle and determining an actual output power of the fuel cell includes:
acquiring the requested power, a charging power of a power battery, and a rated power of an electric heater;
determining a maximum output power of the fuel cell according to the rated power and the charging power; and
determining an actual output power of the fuel cell according to the requested power, the rated power and the maximum output power.

Optionally, the determining an actual output power of the fuel cell according to the requested power, the rated power and the maximum output power includes:
if the requested power is less than or equal to the rated power, determining the rated power as the actual output power; and
if the requested power is greater than the rated power, determining the maximum output power as the actual output power.

Optionally, the determining a recovery power or a compensation power according to the requested power and the actual output power includes:
determining an entire vehicle rated output power;
determining a plurality of power intervals according to the rated power, the maximum output power and the entire vehicle rated output power;
determining a target power interval within which the requested power falls; and
determining the recovery power or the compensation power according to the target power interval and the actual output power.

Optionally, the determining an entire vehicle rated output power includes:
acquiring a discharging power of the power battery; and
determining the entire vehicle rated output power of the vehicle according to the maximum output power and the discharging power.

Optionally, the plurality of power intervals include a first power interval, a second power interval, a third power interval and a fourth power interval; and the determining a plurality of power intervals according to the rated power, the maximum output power and the entire vehicle rated output power includes:
determining an interval that is less than or equal to the rated power as the first power interval;
determining an interval that is greater than the rated power and less than or equal to the maximum output power as the second power interval;
determining an interval that is greater than the maximum output power and less than or equal to the entire vehicle rated output power as the third power interval; and
determining an interval that is greater than the entire vehicle rated output power as the fourth power interval.

Optionally, the determining the recovery power or the compensation power according to the target power interval and the actual output power includes:
if the target power interval is the first power interval, determining the rated power as the actual output power, and determining a difference between the rated power and the requested power as the recovery power;
if the target power interval is the second power interval, determining the maximum output power as the actual output power, and determining a difference between the maximum output power and the requested power as the recovery power;
if the target power interval is the third power interval, determining the maximum output power as the actual output power, and determining a difference between the requested power and the maximum output power as the compensation power; and
if the target power interval is the fourth power interval, determining the maximum output power as the actual output power, and giving a power reduction prompt.

Optionally, the determining a startup mode of a fuel cell includes:
detecting the current battery level of a power battery and coolant temperature of the fuel cell; and
determining a startup mode of the fuel cell according to the current battery level and the coolant temperature.

Optionally, the determining a startup mode of the fuel cell according to the current battery level and the coolant temperature includes:
determining a vehicle power-on status according to the current battery level; and
if the vehicle is powered on successfully, determining the startup mode according to the coolant temperature.

Optionally, the determining a vehicle power-on status according to the current battery level includes:
comparing the current battery level with a preset startup threshold;
if the current battery level is less than or equal to the startup threshold, giving a low battery level prompt and determining that the vehicle fails to be powered on; and
if the current battery level is greater than the startup threshold, performing pure electric power on, and determining that the vehicle is powered on successfully.

Optionally, the determining the startup mode according to the coolant temperature includes:
comparing the coolant temperature with a preset threshold temperature;
if the coolant temperature is greater than or equal to the threshold temperature, determining the startup mode as a normal-temperature startup mode; and
if the coolant temperature is lower than the threshold temperature, determining the startup mode as the low-temperature cold startup mode.

Optionally, the low-temperature cold startup mode is a mode in which the fuel cell is started when the coolant temperature is lower than the threshold temperature after the vehicle is successfully powered on.

A second aspect of the present invention provides a battery energy management apparatus, including: a processor, wherein the processor is configured to execute the following program modules stored in a memory:
a startup mode confirmation module configured to determine a startup mode of a fuel cell;
an actual output determination module configured to acquire a requested power of a vehicle and determine an actual output power of the fuel cell if the startup mode is a low-temperature cold startup mode; and
a power management module configured to determine a recovery power or a compensation power according to the requested power and the actual output power.

A third aspect of the present invention provides an electronic device, including a memory, a processor and a computer program stored in the memory and executable on the processor, wherein when executing the program, the processor implements the method provided in the first aspect of the present invention.

A fourth aspect of the present invention provides a vehicle, including the electronic device provided by the third aspect of the present invention.

As can be seen from the above, as to the battery energy management method and apparatus, the electronic device and the vehicle provided by the present invention, firstly the startup mode of a fuel cell needs to be determined. Only in a cold startup mode can the battery energy management method provided by the present invention be used to solve the problems of inability of a vehicle to be powered on, overcharging of a power battery, and insufficient power output in low-temperature environments. After the startup mode is determined as a low-temperature cold startup mode, a requested power of a vehicle is acquired and an actual output power of the fuel cell is determined. The current energy management requirement can be determined by comparing the actual output power with the requested power, and then the recovery power or the compensation power corresponding to the energy management requirement is determined according to the requested power and the actual output power. The recovery power in the actual output power is recovered to ensure that the power battery will not be in danger of overcharging, and the actual output power is compensated for by the compensation power, thereby solving the problem of insufficient power output of a vehicle, further ensuring that the fuel cell can be started smoothly, and avoiding a problem of continuous decrease in the battery level of a power battery or even direct power off of a vehicle.

### BRIEF DESCRIPTION OF THE DRAWINGS

Fig. 1a is a flow chart of a battery energy management method according to an embodiment of the present invention;
Fig. 1b is a flow chart of determining a fuel cell startup mode according to an embodiment of the present invention;
Fig. 2 is a flow chart of determining a requested power and an actual output power according to an embodiment of the present invention;
Fig. 3 is a flow chart of determining an actual output power according to an embodiment of the present invention;
Fig. 4 is a flow chart of determining a recovery power or a compensation power according to an embodiment of the present invention;
Fig. 5 is a flow chart of dividing power intervals according to an embodiment of the present invention;
Fig. 6 is a schematic diagram of a flow chart of determining a recovery power or a compensation power according to a target power interval according to an embodiment of the present invention;
Fig. 7 is a structural schematic diagram of a battery energy management apparatus according to an embodiment of the present invention;
Fig. 8 is a structural schematic diagram of an electronic device according to an embodiment of the present invention.

### DETAILED DESCRIPTION OF THE EMBODIMENTS

In order to make the object, technical solutions and advantages of the present invention more clearly understood, the present invention is further described in detail below in combination with specific embodiments and with reference to accompanying drawings.

As shown in the background, in related technologies, if the temperature of a power battery is lower, the charging power of the power battery will also be very low or may even drop to 0 kW, therefore, the charging power of a battery of a fuel cell vehicle is lower when the temperature of the power battery is lower than -15°C. When the temperature is lower than -20°C, the vehicle can only be started and driven by pure electricity, and the fuel cell is prohibited from starting. However, when the battery level of a power battery is lower, the vehicle may not be able to drive normally. If the fuel cell can be started, if an emergency load reduction condition (the requested power rapidly drops within a short time) occurs during driving, the fuel cell cannot drop instantly due to its characteristics, and when the coolant temperature of the fuel cell is lower than 5°C, the fuel cell is in a cold startup mode. During a cold startup process of a fuel cell, the current of the fuel cell must reach at least 75 A. At this time, the fuel cell generates a power of 23 kW, otherwise there will be a risk of reverse polarity inside the fuel cell, thereby influencing the service life of the fuel cell. However, accessories of the fuel cell can consume up to 13 kW of power, so the actual output power of the fuel cell is 10 kW±1 kW, but at this time the charging power of the power battery is small, and emergency load reduction will cause overcharging of the power battery.

Therefore, when the temperature of a power battery is lower than -15°C and the battery level of the power battery is lower than the startup threshold of the fuel cell, the fuel cell needs to be started to meet dynamic energy balance of a vehicle and prevent the power battery from feeding. However, when the temperature of a power battery of a vehicle is lower than -15°C, the entire vehicle requested power is small and the power battery has no recharging capability (the charging power of the power battery is low, and is even 0 kW). In an emergency load reduction state, the vehicle only allows the actual output power of the fuel cell to be less than or equal to the rechargeable power of the power battery. However, the charging power and the discharging power of the power battery are both affected by the temperature and the current battery level. Therefore, at low temperatures, the rechargeable power of the power battery is very small or is even 0 kW, and the output power of the fuel cell will overcharge the power battery, thereby shortening the service life of the power battery. Therefore, for safety reasons, the vehicle will be prohibited from starting the fuel cell at this time (since at low temperatures, it is necessary to ensure that the output power of the fuel cell must be less than or equal to the rechargeable power of the power battery. Otherwise, due to unique characteristics of the fuel cell, the output power cannot be reduced instantaneously during emergency braking of a vehicle, then the power battery may be overcharged, and the service life of the power battery is shortened). The vehicle must be driven by pure electricity, but when the battery level of the power battery is lower, the vehicle can only be powered off, and further the low-temperature cold startup of the vehicle cannot be completed, and customer's complaint. Moreover, a small charging power limits the actual output power of the fuel cell, thereby possibly resulting in a problem of insufficient power output of a vehicle.

In the battery energy management method provided in the embodiment of the present invention, after the startup mode is determined to be a low-temperature cold startup mode, the current energy management demand can be determined by comparing an actual output power with a requested power, and then a recovery power or a compensation power corresponding to the energy management demand is determined according to the requested power and the actual output power. The recovery power in the actual output power is recovered by an electric heater to ensure that the power battery will not be in danger of overcharging in an emergency load reduction situation. The power battery compensates for the actual output power with the compensation power, and solves the problem of insufficient power output of a vehicle. While recovering power, the electric heater increases the temperature of the power battery and the fuel cell coolant, thereby ensuring that the fuel cell can be started smoothly, and avoiding the problem of continuous decrease in a battery level of the power battery or even direct power off of a vehicle. This is explained in detail in combination with the following embodiments.

In some embodiments, after a user performs a power-on operation, the current battery level of a power battery needs to be detected. When the current battery level is less than or equal to a preset power-off battery level, it is determined that the power of the power battery is too low, the power-on process is stopped, and a driver is notified that the battery level of the power battery is too low; and when the current battery level is greater than the preset power-off battery level, the current battery level is compared with a startup threshold of the fuel cell. If the current battery level is greater than the startup threshold, it indicates that the battery level of the power battery is high and pure electric power on is performed; if the current battery level is less than or equal to the startup threshold, it indicates that the battery level of the power battery is insufficient and the fuel cell needs to be started. If the coolant temperature is greater than the preset temperature threshold at this time, it is determined that the cold startup condition of the fuel cell is not satisfied, and the fuel cell is controlled to start at a normal temperature. If the coolant temperature is less than or equal to the preset temperature threshold at this time, the coolant temperature is determined to satisfy the cold startup condition of the fuel cell, the fuel cell is controlled to perform low-temperature cold startup, after the fuel cell is subjected to low-temperature cold startup, the charging power of a power battery, the actual output power of a fuel cell, the rated power of an electric heater and the requested power of a vehicle are acquired. When the requested power is greater than zero and less than or equal to the rated power, the heating consumption power is calculated, and the entire vehicle is heated according to the heating consumption power; when the requested power is greater than the rated power and less than or equal to the maximum output power, the recovery power is calculated, and the power battery is charged according to the recovery power; when the requested power is greater than the maximum output power and less than or equal to the entire vehicle rated output power, the compensation power is calculated, and the power battery is controlled to discharge according to the compensation power; and when the requested power is greater than the entire vehicle rated output power, the user is prompted to reduce the requested power.

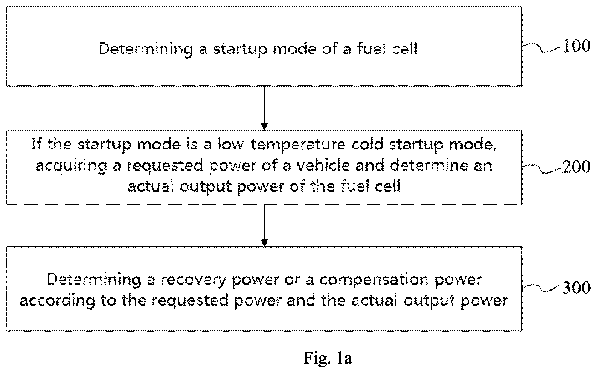

In some embodiments, as shown in Fig. 1a, a battery energy management method includes:
Step 100: determining a startup mode of a fuel cell.

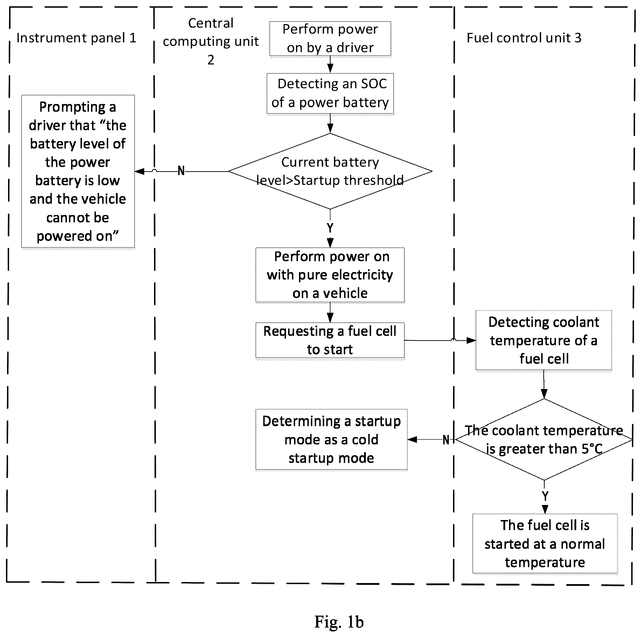

During specific implementation, since the battery low-temperature startup method provided in the embodiment of the present invention is a startup method of a fuel cell in a low-temperature environment and with a lower battery level of the power battery (for example, the temperature of the power battery is lower than -20°C and the temperature of the fuel cell is lower than 5°C), the current battery level of the power battery needs to be determined firstly. Optionally, as shown in Fig. 1b, when a driver performs a power-on process of a vehicle, for example, a vehicle key is inserted into a keyhole and the vehicle key is turned to an "ON" position, a central computing unit (CCU) 2 deployed in the vehicle starts to control the vehicle to execute a power-on process. At this time, the CCU 2 first needs to detect a state-of-charge (SOC) of the power battery to determine the current battery level. If the current battery level of a power battery is less than or equal to a startup threshold of the fuel cell (for example, 5%), it is considered that the battery level of the power battery is lower, and the CCU 2 cannot control the vehicle to continue to perform a power-on process, and prompts the driver through an instrument panel (IP) 1 that "the battery level of a power battery is low and the vehicle cannot be powered on"; if the current battery level of the power battery is greater than 5%, the CCU 2 controls the vehicle to perform pure electric power on. After the vehicle is powered on with pure electricity, the vehicle continues to detect the current battery level of the power battery. When the current battery level of the power battery reaches a startup threshold of the fuel cell, the CCU 2 requests the fuel cell to start and sends a startup request to a fuel control unit (FCU) 3; after the FCU 3 receives the startup request sent by the CCU 2, the FCU 3 controls the fuel cell system to start and detect the coolant temperature of the fuel cell. If the coolant temperature is greater than 5°C, the fuel cell performs normal-temperature startup and determines that the startup type is a normal-temperature startup mode. If the coolant temperature is lower than or equal to 5°C, the fuel cell performs a low-temperature cold startup and determines that the startup type is a cold startup mode. Then, the FCU 3 sends the fuel cell startup type to the CCU 2 and controls the fuel cell to start according to the startup type.

Step 200: If the startup mode is a low-temperature cold startup mode, acquiring a requested power of a vehicle and determining an actual output power of the fuel cell.

During specific implementation, the requested power of a vehicle refers to the power requested from the power battery and/or the fuel cell when a vehicle executes the operation of a driver. In order to meet the requested power of a vehicle, the actual output power of the fuel cell will change with the change of the requested power of the vehicle, but in order to avoid overcharging of the power battery during emergency load reduction, the maximum output power of the fuel cell needs to be limited. The maximum output power of the fuel cell refers to a maximum power allowed to be released by the fuel cell during a cold startup process in order to avoid damage to the power battery due to overcharging. Exemplarily, the maximum output power can be composed of two parts, namely, a rated power of an electric heater and a charging power of a power battery, wherein the rated power of an electric heater refers to an effective power that the electric heater can continuously output, that is, the maximum power at which the electric heater can continue to work under normal working conditions, that is, the maximum power that the electric heater can consume.

Step 300: determining a recovery power or a compensation power according to the requested power and the actual output power.

During specific implementation, the total output of the power battery and the fuel cell is taken as an entire vehicle rated output power, and the maximum output power of the fuel cell is P_{F}=P_{BC}+P_{PTC}, the maximum output power of a power battery is the discharging power P_{BD} at the current temperature and the current battery level, wherein P_{BC} is the charging power of a power battery at the current temperature and the current battery level, and P_{PTC} is the rated power of an electric heater. Taking a sum of the rated power and the charging power as the maximum output power can ensure that the power battery and the electric heater can consume all the actual output power after a vehicle enters an emergency load reduction state, thereby avoiding overcharging of a power battery or overloading operation of an electric heater caused by excessively high power, and reducing safety hazards. The entire vehicle rated output power P_{V}=P_{BD}+P_{F}=P_{BC}+P_{BD}+P_{PTC}. When the requested power is less than or equal to the entire vehicle rated output power, an electric heater can be used to recover the recovery power in the actual output power that exceeds the requested power, thereby ensuring that the power battery will not be at a risk of overcharging during emergency load reduction. The power battery compensates for the actual output power with a compensation power by which the requested power exceeds the actual output power, thereby solving the problem of insufficient power output of a vehicle. However, when the requested power is greater than the entire vehicle rated output power, for safety reasons, the output of the fuel cell cannot be further increased. Instead, only a driver can be prompted that the current power is insufficient, such that the driver can reduce the requested power.

In summary, after the startup mode is determined as a low-temperature cold startup mode, the current energy management demand can be determined by comparing the actual output power with the requested power. Then, when the requested power is less than or equal to the entire vehicle rated output power, the electric heater is used to recover the recovery power in the actual output power to ensure that the power battery will not be in danger of overcharging in an emergency load reduction situation; or the power battery is controlled to compensate for the actual output power with the compensation power, thereby solving the problem of insufficient power output of a vehicle. While recovering power, the electric heater increases the temperature of the power battery and the fuel cell coolant, thereby ensuring that the fuel cell can be started smoothly, and avoiding a problem of continuous decrease in the battery level of the power battery or even direct power off of the vehicle.

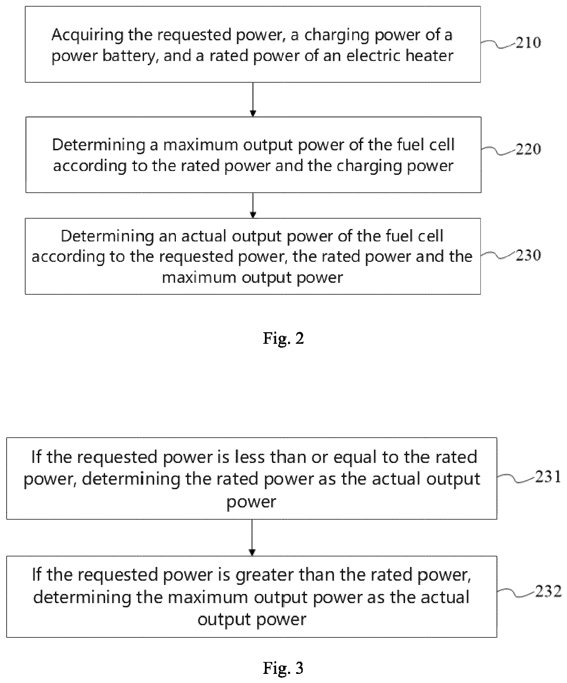

In some embodiments, as shown in Fig. 2, the acquiring a requested power of a vehicle and determining an actual output power of the fuel cell includes:
Step 210: acquiring a requested power, a charging power of a power battery, and a rated power of an electric heater.

During specific implementation, when a driver operates a vehicle, the required requested power is determined according to a request of the driver; since the charging power of a power battery is positively correlated with the current temperature of the power battery and the rate of change is large, a small change in temperature will produce a large change in the charging power, and the charging power of the power battery is negatively correlated with the battery level of the power battery, the rate of change is small, and a large change in the battery level will produce a large change in the charging power; exemplarily, when the current temperature is -18°C and the battery level is 6%, if the charging power of the power battery is 19 kW at this time (when it is lower than -20°C, the charging power may rapidly drop to 0 kW), when the temperature rises to -10°C, under a premise that the battery level remains unchanged, the charging power can reach 45 kW; and when the current temperature remains unchanged and when the battery level increases from 6% to 10%, the charging power of the power battery will only change from 19 kW to 18 kW. Therefore, when the fuel cell is determined to be in a cold startup mode, it indicates that at this time, the current temperature of the power battery is already lower than -15°C, and the battery level is already lower than a startup threshold of the fuel cell. At this time, a change in the battery level will hardly cause a change in power, so the charging power of the power battery is mainly determined by the current temperature; optionally, the rated power of the electric heater has been stored in a storage medium of a vehicle when the electric heater is mounted. When the data is needed, the rated power in the storage medium can be invoked.

Step 220: determining a maximum output power of the fuel cell according to the rated power and the charging power.

During specific implementation, exemplarily, the sum of the rated power P_{PTC} and the charging power P_{BC} is calculated, P_{F} =P_{BC} +P_{PTC}, and P_{F} is determined as the maximum output power of a fuel cell. The sum of the rated power and the charging power is used as a maximum output power to ensure that the power battery and the electric heater can consume all the actual output power after a vehicle enters an emergency load reduction state, thereby avoiding overcharging of a power battery or overloading operation of an electric heater caused by excessively high power, and reducing safety hazards.

Step 230: determining an actual output power of the fuel cell according to the requested power, the rated power and the maximum output power.

During specific implementation, if the requested power is less than or equal to the rated power, P_{V}'≤P_{PTC} = 10 kW, and the actual output power of the fuel cell at this time is P_{F} = 10 kW; and if the requested power is greater than the rated power, P_{V}'≥P_{PTC}=10 kW, and the actual output power of the fuel cell is the maximum output power P_{F}=P_{BC}+P_{PTC}=P_{BC}+10 kW.

In some embodiments, as shown in Fig. 3, the determining an actual output power of the fuel cell according to the requested power, the rated power and the maximum output power includes:

Step 231: if the requested power is less than or equal to the rated power, determining the rated power as the actual output power.

During specific implementation, if the requested power is less than or equal to the rated power, the rated power is determined as the actual output power of a fuel cell. Since when the requested power is less than or equal to the rated power, although controlling the actual output power of the fuel cell to be equal to the requested power can meet driving demands of a driver, however, the power battery does not operate at this time, and the temperature rises slowly. Therefore, a difference power 10-P_{V}' between the rated power and the requested power is used to run an electric heater to accelerate temperature rise of a power battery and reduce the time by which a fuel cell is started; and after a vehicle enters an emergency load reduction state, the electric heater can consume all of the actual output power to ensure that there is no risk of overcharging the power battery.

Step 232: if the requested power is greater than the rated power, determining the maximum output power as the actual output power.

During specific implementation, if the requested power is greater than the rated power, the maximum output power is determined as the actual output power of a fuel cell. Since when the requested power is greater than the rated power, although controlling the actual output power of the fuel cell to be equal to the requested power can meet driving demands of a driver, the power battery is not operating at this time and temperature rises very slowly. Therefore, a difference power P_{F} -P_{V}' between the maximum output power and the requested power is used to run the electric heater to accelerate temperature rise of the power battery and reduce the time by which the fuel cell is started; and after a vehicle enters an emergency load reduction state, since a sum of the charging power of the power battery and the rated power of the electric heater is equal to the maximum output power, the power battery and the electric heater can consume all the actual output power at this time, so there is no risk of overcharging the power battery.

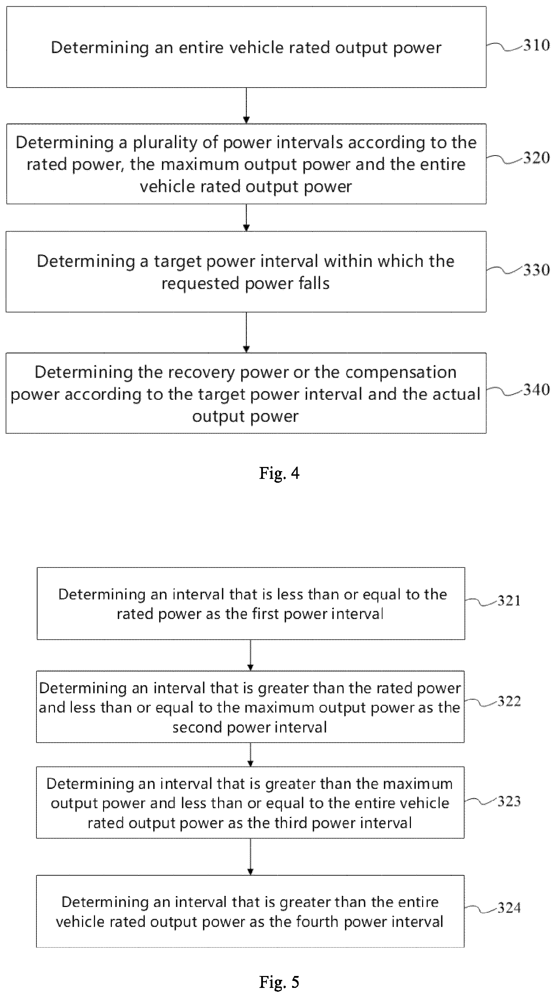

In some embodiments, as shown in Fig. 4, the determining a recovery power or a compensation power according to the requested power and the actual output power includes:
Step 310: determining an entire vehicle rated output power.

In some embodiments, step 310 includes: acquiring a discharging power of a power battery, and determining the entire vehicle rated output power according to the maximum output power and the discharging power.

During specific implementation, since the discharging power of the power battery is positively correlated with the current temperature of the power battery, a change in temperature will lead to an increase in the discharging power, and the discharging power of the power battery is also positively correlated with the battery level of the power battery, and a change in the battery level will lead to an increase in the discharging power; exemplarily, when the current temperature is -20°C and the battery level is 6%, if the discharging power of the power battery is 10 kW at this time, when the temperature rises to -10°C, under a premise that the battery level remains unchanged, the discharging power can reach 13 kW; and when the current temperature remains unchanged and when the battery level increases from 6% to 10%, the discharging power of a power battery changes from 10 kW to 12 kW, so the discharging power of the power battery can be determined by the current temperature and current battery level of the power battery, then the entire vehicle rated output power P_{V} = P_{BD}+P_{F} = P_{BC}+P_{BD}+P_{PTC}, and the entire vehicle rated output power P_{V} represents the maximum output power that the power battery and the fuel cell can currently provide to a vehicle.

Step 320: determining a plurality of power intervals according to the rated power, the maximum output power and the entire vehicle rated output power.

During specific implementation, exemplarily, the plurality of power intervals include a first power interval, a second power interval, a third power interval and a fourth power interval; as shown in Fig. 5, step 320 includes:
Step 321: determining an interval that is less than or equal to the rated power as the first power interval.

During specific implementation, an interval of 0 kW to 10 kW is used as the first power interval because an electric heater can consume an upper limit value of the first power interval.

Step 322: determining an interval that is greater than the rated power and less than or equal to the maximum output power as the second power interval.

During specific implementation, an interval of 10 kW to P_{F} is used as the second power interval because the electric heater needs to be used for power recovery at this time.

Step 323: determining an interval that is greater than the maximum output power and less than or equal to the entire vehicle rated output power as the third power interval.

During specific implementation, an interval of P_{F} to P_{V} is used as the third power interval because the power battery needs to be used for power compensation at this time.

Step 324: determining an interval that is greater than the entire vehicle rated output power as the fourth power interval.

During specific implementation, an interval greater than P_{V} is used as the fourth power interval because a power limit reminder is required at this time.

Step 330: determining a target power interval within which the requested power falls.

During specific implementation, a target power interval within which the requested power falls is determined by comparing a specific value of the requested power with upper and lower power limit values of each power interval.

Step 340: determining the recovery power or the compensation power according to the target power interval and the actual output power.

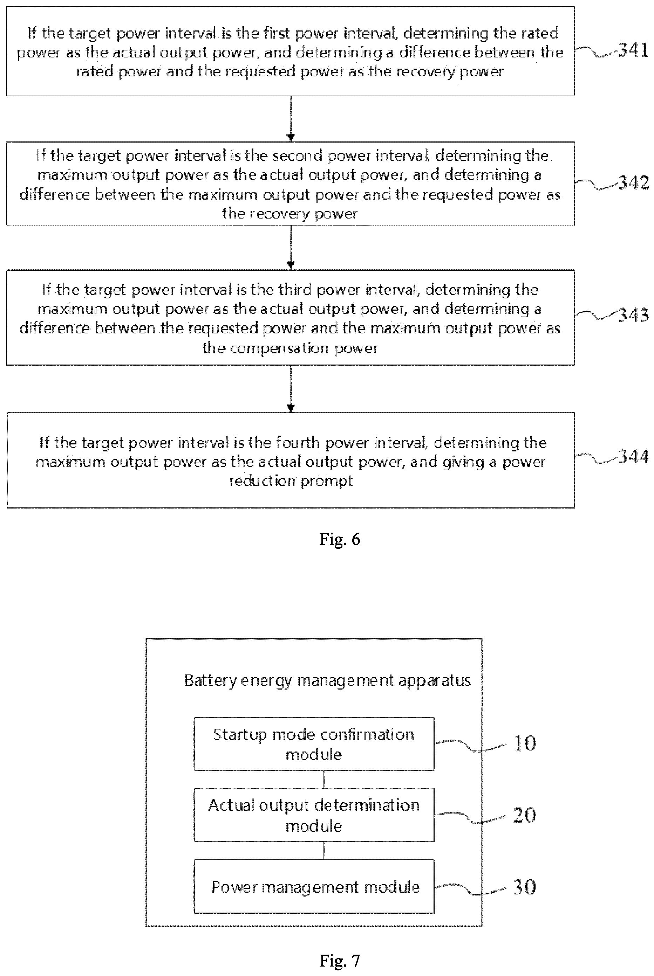

In some embodiments, as shown in Fig. 6, step 340 includes:
Step 341: if the target power interval is the first power interval, determining the rated power as the actual output power, and determining a difference between the rated power and the requested power as the recovery power.

During specific implementation, exemplarily, if the requested power is P_{V}'=8 kW, 0 kW≤8 kW≤10 kW, the requested power is in the first power interval, so the first power interval is used as a target power interval. At this time, the FCU 3 controls the fuel cell to operate with a rated power of 10 kW as the actual output power. The actual output power of a fuel cell drives a vehicle according to the requested power, and uses 10-P_{V}'=10-8=2 kW as the recovery power. An electric heater is used to consume the recovery power to accelerate temperature rise of the power battery and the fuel cell coolant.

Step 342: if the target power interval is the second power interval, determining the maximum output power as the actual output power, and determining a difference between the maximum output power and the requested power as the recovery power.

During specific implementation, exemplarily, if the requested power is P_{V}'=12 kW, and the charging power P_{BC}=18 kW, then P_{F}=P_{BC}+P_{PTC}=10+18=28 kW, 10 kW≤12 kW≤28 kW, and the requested power is in the second power interval, so the second power interval is used as the target power interval. At this time, the FCU 3 controls the fuel cell to operate with a maximum output power of 28 kW as the actual output power. The actual output power of the fuel cell drives a vehicle according to the requested power, and 28-Pv '=28-12=16 kW is used as the recovery power. Firstly, an electric heater is used to consume the recovery power with a rated power of 10 kW, and then the remaining 6 kW is used to charge the power battery, thereby accelerating temperature rise of the power battery and the fuel cell coolant, and ensuring that the power battery is sufficiently charged.

Step 343: if the target power interval is the third power interval, determining the maximum output power as the actual output power, and determining a difference between the requested power and the maximum output power as the compensation power.

During specific implementation, exemplarily, if the requested power is P_{V} '=30 kW, the charging power P_{BC} =18 kW, and the discharging power P_{BD} =12 kW, then the maximum output power P_{F} =P_{BC}+P_{PTC}=10+18=28 kW, and the entire vehicle rated output power P_{V} =P_{BD}+P_{F}=P_{BC} +P_{BD} +P_{PTC}=18+12+10=40 kW, 28 kW≤30 kW≤40 kW, and the requested power is in the third power interval, so the third power interval is used as a target power interval. At this time, the FCU 3 controls the fuel cell to operate with a maximum output power of 28 kW as the actual output power. The actual output power of the fuel cell cannot meet driving demands of a vehicle. When the battery level of a power battery is higher than the power-off threshold battery level (for example, 5%), the power battery is used to compensate for the actual output power of the fuel cell. The compensation power is 30-P_{F} =30-28=2 kW. Power compensation can meet the current driving demands of a driver, thereby solving the problem of insufficient power output during a low-temperature startup process of a fuel cell vehicle, and improving driving experience of a driver.

Step 344: if the target power interval is the fourth power interval, determining the maximum output power as the actual output power, and giving a power reduction prompt.

During specific implementation, exemplarily, if the requested power is Pv'=45 kW, the charging power P_{BC}=18 kW, and the discharging power P_{BD} =12 kW, then the maximum output power P_{F}=P_{BC}+P_{PTC}=10+18=28 kW, and the entire vehicle rated output power P_{V}=P_{BD}+P_{F}=P_{BC}+P_{BD}+P_{PTC}=18+12+10=40 kW, 40 kW<45 kW, the requested power is in the fourth power interval, so the fourth power interval is used as a target power interval. At this time, the FCU 3 controls a fuel cell to operate with a maximum output power of 28 kW as the actual output power. The actual output power of a fuel cell still cannot meet the current vehicle driving requirements after the power battery is compensated for with a discharging power P_{BD}=12 kW. For safety reasons, the output power of a fuel cell cannot be further increased, and a driver can only be prompted that the current power is insufficient, such that the driver can reduce the requested power and avoid overcharging of a power battery.

It should be noted that the method of the embodiment of the present invention can be performed by a single device, such as a computer or a server. The method of this embodiment can also be applied to a distributed scenario and can be completed by cooperation between a plurality of devices. In such a distributed scenario, one of the plurality of devices can only perform one or more steps in the method of the embodiment of the present invention, and the plurality of devices will interact with each other to complete the method.

It should be noted that some embodiments of the present invention are described above, and other embodiments fall within the scope of the appended claims. In some cases, actions or steps recorded in the claims can be performed in an order different from that in the above embodiments and can still achieve desired results. In addition, the processes depicted in the accompanying drawings do not necessarily require a specific order or a continuous order shown to achieve desired results. In some embodiments, multitasking processing and parallel processing are also possible or may be advantageous.

Based on the same inventive concept, corresponding to the method in any of the above embodiments, the present invention also provides a battery energy management apparatus.

Referring to Fig. 7, the battery energy management apparatus includes: a processor, wherein the processor is configured to execute the following program modules stored in a memory:
a startup mode confirmation module 10 configured to determine a startup mode of a fuel cell;
an actual output determination module 20 configured to acquire a requested power of a vehicle and determine an actual output power of the fuel cell if the startup mode is a low-temperature cold startup mode; and
a power management module 30 configured to determine a recovery power or a compensation power according to the requested power and the actual output power.

In some embodiments, the actual output determination module 20 includes the following program submodules:
a power parameter acquisition submodule configured to acquire a requested power, a charging power of a power battery and a rated power of an electric heater;
a maximum output power calculation submodule configured to determine a maximum output power of the fuel cell according to the rated power and the charging power; and
an actual output power determination submodule configured to determine the actual output power of the fuel cell according to the requested power, the rated power and the maximum output power.

In some embodiments, the actual output power determination submodule includes the following program units:
a first power calculation unit configured to determine the rated power as the actual output power if the requested power is less than or equal to the rated power; and
a second power calculation unit configured to determine the maximum output power as the actual output power if the requested power is greater than the rated power.

In some embodiments, the power management module 30 includes the following program submodules:
an entire vehicle power determination submodule configured to determine the entire vehicle rated output power;
a power interval determination submodule configured to determine a plurality of power intervals according to the rated power, the maximum output power and the entire vehicle rated output power;
a target interval determination submodule configured to determine a target power interval within which the requested power falls; and
a recovery and compensation submodule configured to determine the recovery power or the compensation power according to the target power interval and the actual output power.

In some embodiments, the entire vehicle power determination submodule includes the following program units:
a discharging power determination unit configured to acquire the discharging power of a power battery; and
an entire vehicle output power calculation unit configured to determine the entire vehicle rated output power according to the maximum output power and the discharging power.

In some embodiments, the plurality of power intervals include a first power interval, a second power interval, a third power interval, and a fourth power interval; and the target interval determination submodule includes the following program units:
a first target interval determination unit configured to determine an interval that is less than or equal to the rated power as the first power interval;
a second target interval determination unit configured to determine an interval that is greater than the rated power and less than or equal to the maximum output power as the second power interval;
a third target interval determination unit configured to determine an interval that is greater than the maximum output power and less than or equal to the entire vehicle rated output power as the third power interval; and
a fourth target interval determination unit configured to determine an interval that is greater than the entire vehicle rated output power as the fourth power interval.

In some embodiments, the recovery compensation submodule includes the following program units:
a first recovery power determination unit configured to: if the target power interval is the first power interval, determine the rated power as the actual output power, and determine a difference between the rated power and the requested power as the recovery power;
a second recovery power determination unit configured to: if the target power interval is the second power interval, determine the maximum output power as the actual output power, and determine a difference between the maximum output power and the requested power as the recovery power;
a compensation power determination unit configured to: if the target power interval is the third power interval, determine the maximum output power as the actual output power, and determine a difference between the requested power and the maximum output power as the compensation power; and
a power reduction prompting unit configured to: if the target power interval is the fourth power interval, determine the maximum output power as the actual output power, and give a power reduction prompt.

In some embodiments, the startup mode confirmation module 10 includes the following program submodules:
a battery level and temperature detection submodule configured to detect the current battery level of a power battery and the coolant temperature of a fuel cell; and
a startup mode determination submodule configured to determine the startup mode of a fuel cell according to the current battery level and the coolant temperature.

In some embodiments, the startup mode determination submodule includes the following program units:
a power-on judgment unit configured to determine the power-on status of a vehicle according to the current battery level; and
a mode judgment unit configured to determine a startup mode according to the coolant temperature if the vehicle is powered on successfully.

In some embodiments, the power-on judgment unit includes the following program subunits:
a battery level comparison subunit configured to compare the current battery level with a preset startup threshold;
a low battery level prompt subunit configured to issue a low battery level prompt to determine that the vehicle fails to be powered on if the current battery level is less than or equal to the startup threshold, and
a pure electric power-on subunit configured to perform pure electric power on to determine that a vehicle is powered on successfully if the current battery level is greater than the startup threshold.

In some embodiments, the mode judgment unit includes the following program subunits:
a temperature comparison subunit configured to compare the coolant temperature with a preset threshold temperature;
a normal-temperature startup subunit configured to determine that the startup mode is a normal-temperature startup mode if the coolant temperature is greater than or equal to a threshold temperature; and
a low-temperature cold startup subunit configured to determine that the startup mode is a low-temperature cold startup mode if the coolant temperature is lower than a threshold temperature.

For convenience of description, the above apparatus is described in terms of functions divided into various modules. Of course, when implementing the present invention, the functions of each module can be implemented in the same or a plurality of software and/or hardware.

The apparatus of the above embodiments is used to implement the corresponding battery energy management method in any of the above embodiments, and has beneficial effects of the corresponding method embodiments, which will not be repeated redundantly herein.

Based on the same inventive concept, corresponding to the method in any of the above embodiments, the present invention also provides an electronic device, including a memory, a processor, and a computer program stored in the memory and executable on the processor, wherein when the processor executes the program, the battery energy management method in any of the above embodiments is implemented.

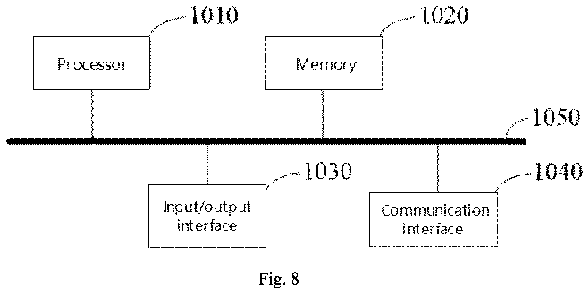

Fig. 8 shows a more specific schematic diagram of a hardware structure of an electronic device provided in this embodiment, and the device may include: a processor 1010, a memory 1020, an input/output interface 1030, a communication interface 1040, and a bus 1050. The processor 1010, the memory 1020, the input/output interface 1030, and the communication interface 1040 are in communication connection with each other within a device via the bus 1050.

The processor 1010 can be implemented by a general-purpose CPU (Central Processing Unit), a microprocessor, an application specific integrated circuit (ASIC), or one or more integrated circuits, and is configured to execute relevant programs to implement the technical solutions provided in the embodiments of this specification.

The memory 1020 may be implemented in the form of an ROM (Read Only Memory), an RAM (Random Access Memory), a static storage device, a dynamic storage device, etc. The memory 1020 may store an operating system and other applications. When the technical solutions provided in the embodiments of this specification are implemented by software or firmware, relevant program codes are stored in the memory 1020 and are invoked and executed by the processor 1010.

The input/output interface 1030 is configured to connect the input/output module to realize information input and output. The input/output module can be configured in a device as a component (not shown in the figure), or can be externally connected to a device to provide corresponding functions. The input device may include a keyboard, a mouse, a touch screen, a microphone, various sensors, etc., and the output device may include a display, a speaker, a vibrator, an indicator light, etc.

The communication interface 1040 is configured to connect a communication module (not shown in the figure) to realize communication interaction between this device and other devices. The communication module can realize communication through a wired mode (such as a USB, a network cable, etc.) or a wireless mode (such as a mobile network, WIFI, Bluetooth, etc.).

The bus 1050 includes a path that transmits information between various components (e.g., the processor 1010, the memory 1020, the input/output interface 1030, and the communication interface 1040) of a device.

It should be noted that, although the above device only shows the processor 1010, the memory 1020, the input/output interface 1030, the communication interface 1040 and the bus 1050, in a specific implementation process, the device may also include other components necessary for normal operation. In addition, it can be understood by those skilled in the art that the above device may also only include the components necessary for implementing the solutions in the embodiments of this specification, and does not necessarily include all the components shown in the figures.

The electronic device of the above embodiment is configured to implement the corresponding battery energy management method in any of the above embodiments, and has beneficial effects of the corresponding method embodiments, which will not be repeated redundantly herein.

Based on the same inventive concept, corresponding to the method in any of the above embodiments, the present invention also provides a computer-readable storage medium, wherein the computer-readable storage medium stores computer instructions, and the computer instructions are used to enable a computer to execute the battery energy management method of any of the above embodiments.

The computer-readable medium of this embodiment includes permanent and non-permanent, removable and non-removable media, and information can be stored by any method or technology. The information can be computer-readable instructions, data structures, modules of programs, or other data. Examples of computer storage media include, but are not limited to, a phase-change random access memory (PRAM), a static random access memory (SRAM), a dynamic random access memory (DRAM), other types of random access memories (RAMs), a read-only memory (ROM), an electrically erasable programmable read-only memory (EEPROM), a flash memory or other memory technologies, a compact disk read-only memory (CD-ROM), a digital versatile disk (DVD) or other optical storage media, magnetic cassettes, magnetic tape magnetic disk storage media, or other magnetic storage devices or any other non-transmission media that can be used to store information accessed by a computing device.

The computer instructions stored in the storage medium of the above embodiments are used to enable a computer to execute the battery energy management method of any of the above embodiments, and have beneficial effects of the corresponding method embodiments, which will not be repeated redundantly herein.

It should be noted that the embodiments of the present invention can be further described in the following manner:

In some embodiments, the CCU 2 acquires the current battery level of a power battery. If the current battery level of a power battery is less than or equal to 5%, the CCU 2 sends display information of "the battery level of a power battery is low and the vehicle cannot be powered on" to the instrument panel 1; if the current battery level of a power battery is greater than 5%, the CCU 2 controls the vehicle to perform pure electric power on. After the vehicle is powered on with pure electricity, the CCU 2 continues to detect the current battery level of a power battery. When the current battery level of a power battery reaches the startup threshold of a fuel cell, the CCU 2 sends a startup request to the FCU 3. If the current battery level of a power battery does not reach a startup threshold of a fuel cell, the current battery level of a power battery is continuously detected, until the current battery level reaches the startup threshold; then, the charging power of a power battery, the actual output power of a fuel cell, the rated power of an electric heater and the requested power of a vehicle are acquired. When the requested power is greater than zero and less than or equal to the rated power, the consumed power of an electric heater is calculated and sent to a vehicle integration unit; when the requested power is greater than the rated power and less than or equal to the maximum output power, the recovery power is calculated, and the recovery power is sent to the battery management system; when the requested power is greater than the maximum output power and less than or equal to the entire vehicle rated output power, the compensation power is calculated and sent to a battery management system; and when the requested power is greater than the entire vehicle rated output power, a power reduction request information is sent to the instrument panel 1.

In some embodiments, after receiving a startup request sent by the CCU 2, the FCU 3 controls a fuel cell system to start and acquires the charging power of a power battery and the rated power of an electric heater, determines the maximum output power according to the charging power and the rated power, determines the actual output power, and sends the actual output power to the CCU 2.

In some embodiments, after receiving the consumed power, a vehicle integration unit controls the electric heater to perform heating according to the consumed power.

In some embodiments, when receiving the compensation power, the battery management system controls a power battery to discharge according to the compensation power; and when receiving the recovery power, the battery management system controls a power battery to charge according to the recovery power.

Those skilled in the art should understand that the discussion of any of the above embodiments is merely illustrative and is not intended to imply that the scope of the present invention (including the claims) is limited to these examples. In line with the concept of the present invention, technical features in the above embodiments or different embodiments may be combined, the steps may be implemented in any order, and there are many other variations of different aspects of the above embodiments of the present invention, and such variations are not provided in details for the sake of simplicity.

In addition, to simplify description and discussion, and in order not to make the embodiments of the present invention difficult to understand, the known power supply/ground connection with an integrated circuit (IC) chip and other components may be or may not be shown in the provided figures. In addition, the apparatus can be shown in the form of a block diagram to avoid making the embodiments of the present invention difficult to understand, and this also takes into account the fact that details of the implementation of these block diagram apparatuses are highly dependent on a platform to be implemented in the embodiments of the present invention (that is, these details should fully fall within the scope of understanding of those skilled in the art). When specific details (e.g., circuits) are elaborated to describe exemplary embodiments of the present invention, it is obvious to those skilled in the art that embodiments of the present invention can be implemented without these specific details or when these specific details are changed. Therefore, these descriptions should be considered illustrative rather than restrictive.

Although the present invention has been described in combination with specific embodiments of the present invention, according to the above descriptions, many substitutions, modifications and variations of these embodiments will be apparent to those skilled in the art. For example, other memory architectures (e.g., a dynamic RAM (DRAM)) may use the discussed embodiments.

The embodiments of the present invention are intended to cover all such substitutions, modifications and variations that fall within a broad scope of the appended claims. Therefore, any omissions, modifications, equivalent substitutions, improvements and the like made within the spirit and principles of the embodiments of the present invention should be included in the protection scope of the present invention.

## Claims

1. A battery energy management method, comprising:
determining a startup mode of a fuel cell;
if the startup mode is a low-temperature cold startup mode, acquiring a requested power of a vehicle and determining an actual output power of the fuel cell; and
determining a recovery power or a compensation power according to the requested power and the actual output power.

2. The method according to claim 1, wherein the acquiring a requested power of a vehicle and determining an actual output power of the fuel cell comprises:
acquiring the requested power, a charging power of a power battery, and a rated power of an electric heater;
determining a maximum output power of the fuel cell according to the rated power and the charging power; and
determining an actual output power of the fuel cell according to the requested power, the rated power and the maximum output power.

3. The method according to claim 2, wherein the determining an actual output power of the fuel cell according to the requested power, the rated power and the maximum output power comprises:
if the requested power is less than or equal to the rated power, determining the rated power as the actual output power; and
if the requested power is greater than the rated power, determining the maximum output power as the actual output power.

4. The method according to claim 2, wherein the determining a recovery power or a compensation power according to the requested power and the actual output power comprises:
determining an entire vehicle rated output power;
determining a plurality of power intervals according to the rated power, the maximum output power and the entire vehicle rated output power;
determining a target power interval within which the requested power falls; and
determining the recovery power or the compensation power according to the target power interval and the actual output power.

5. The method according to claim 4, wherein the determining an entire vehicle rated output power comprises:
acquiring a discharging power of the power battery; and
determining the entire vehicle rated output power of the vehicle according to the maximum output power and the discharging power.

6. The method according to claim 4, wherein the plurality of power intervals comprise a first power interval, a second power interval, a third power interval and a fourth power interval; and the determining a plurality of power intervals according to the rated power, the maximum output power and the entire vehicle rated output power comprises:
determining an interval that is less than or equal to the rated power as the first power interval;
determining an interval that is greater than the rated power and less than or equal to the maximum output power as the second power interval;
determining an interval that is greater than the maximum output power and less than or equal to the entire vehicle rated output power as the third power interval; and
determining an interval that is greater than the entire vehicle rated output power as the fourth power interval.

7. The method according to claim 6, wherein the determining the recovery power or the compensation power according to the target power interval and the actual output power comprises:
if the target power interval is the first power interval, determining the rated power as the actual output power, and determining a difference between the rated power and the requested power as the recovery power;
if the target power interval is the second power interval, determining the maximum output power as the actual output power, and determining a difference between the maximum output power and the requested power as the recovery power;
if the target power interval is the third power interval, determining the maximum output power as the actual output power, and determining a difference between the requested power and the maximum output power as the compensation power; and
if the target power interval is the fourth power interval, determining the maximum output power as the actual output power, and giving a power reduction prompt.

8. The method according to claim 1, wherein the determining a startup mode of a fuel cell comprises:
detecting the current battery level of the power battery and coolant temperature of the fuel cell; and
determining a startup mode of the fuel cell according to the current battery level and the coolant temperature.

9. The method according to claim 8, wherein the determining a startup mode of the fuel cell according to the current battery level and the coolant temperature comprises:
determining a vehicle power-on status according to the current battery level; and
if the vehicle is powered on successfully, determining the startup mode according to the coolant temperature.

10. The method according to claim 9, wherein the determining a vehicle power-on status according to the current battery level comprises:
comparing the current battery level with a preset startup threshold;
if the current battery level is less than or equal to the startup threshold, giving a low battery level prompt and determining that the vehicle fails to be powered on; and
if the current battery level is greater than the startup threshold, performing pure electric power on, and determining that the vehicle is powered on successfully.

11. The method according to claim 9, wherein the determining the startup mode according to the coolant temperature comprises:
comparing the coolant temperature with a preset threshold temperature;
if the coolant temperature is greater than or equal to the threshold temperature, determining the startup mode as a normal-temperature startup mode; and
if the coolant temperature is lower than the threshold temperature, determining the startup mode as the low-temperature cold startup mode.

12. The method according to claim 11, wherein the low-temperature cold startup mode is a mode in which the fuel cell is started when the coolant temperature is lower than the threshold temperature after the vehicle is successfully powered on.

13. A battery energy management apparatus, comprising: a processor, wherein the processor is configured to execute the following program modules stored in a memory:
a startup mode confirmation module configured to determine a startup mode of a fuel cell;
an actual output determination module configured to acquire a requested power of a vehicle and determine an actual output power of the fuel cell if the startup mode is a low-temperature cold startup mode; and
a power management module configured to determine a recovery power or a compensation power according to the requested power and the actual output power.

14. An electronic device, comprising a memory, a processor and a computer program stored in the memory and executable on the processor, wherein when executing the program, the processor implements the method according to any one of claims 1 to 12.

15. A vehicle, comprising the electronic device as claimed in claim 9.
